Europäisches Patentamt

European Patent Office

Office européen des brevets

(19)

(11) Publication number: 0 376 934
A2

# (12) EUROPEAN PATENT APPLICATION

(21) Application number: 90200473.8

(22) Date of filing: 06.08.87

(51) Int. Cl.⁵: B60J 10/08

This application was filed on 28-02-1990 as a divisional application to the application mentioned under INID code 60.

(30) Priority: 28.01.87 US 7543

(43) Date of publication of application:
04.07.90 Bulletin 90/27

(60) Publication number of the earlier application in accordance with Art.76 EPC: 0 279 100

(84) Designated Contracting States:
BE DE ES FR IT LU NL

(71) Applicant: GENCORP INC.
175 Ghent Road
Akron Ohio 44313-3300(US)

(72) Inventor: Bocchinfuso, Peter
18 Beacon Hill Drive
St. Catherines, Ontario L2T 2X7(CA)

(74) Representative: Paget, Hugh Charles Edward et al
MEWBURN ELLIS 2 Cursitor Street
London EC4A 1BQ(GB)

(54) Weatherstripping e.g. for automobiles.

(57) A resilient weatherstrip for an automobile door has a bulbous sealing portion (7) which is integral with a metal-reinforced carrier (8) that attaches to the flange (9) of the automobile frame surrounding the door. The carrier has fingers (26,27) with stops (28,29) for engaging abutments (32,33) which project into the opening through which the flange (9) passes as the carrier (8) is mounted in the door opening. The flange (9) pushes the fingers (26,27) apart so that the stops (28,29) interlock with the abutments should the carrier attempt to leave the flange.

FIG. 1

EP 0 376 934 A2

# WEATHERSTRIPPING E.G. FOR AUTOMOBILES

This is a divisional of Application 87306980.1 (279 100).

The invention relates to weatherstripping, especially resilient elastomeric weatherstripping that is used to seal the doors or decklid openings of automobiles. Such weatherstripping generally comprises a hollow bulbous portion which acts to seal the space between two automobile parts, and an integrally formed portion adapted for holding the weatherstripping in place between the parts.

GB-A-2,163,470 discloses a flange trim or sealing strip having a chennel section with elongate resilient limbs projecting in from the side walls to grip a flange. Sloping projections are provided on the side walls which abut the limb ends when the strip is pulled away from the flange, thereby to prevent or hinder removal of the strip from the flange.

The invention is directed to a weatherstrip with a new kind of carrier channel.

The invention provides a resilient weatherstrip adapted to fit between two parts, one of which is movable relative to the other, stationary, part, the weatherstrip comprising:

(a) a hollow bulbous sealing portion, and

(b) a carrier for attachment to said stationary part, the hollow bulbous sealing portion extending from the carrier for engaging and being compressed by the movable part when it moves towards said stationary part, the carrier in cross section having:

a generally U-shaped body with an open end and a closed end, and a pair of opposing sidewalls extending longitudinally from the closed end to the open end;

a pair of abutments projecting from the sidewalls inwardly towards each other into the space between the sidewalls, the abutments each having an engaging face spaced from and facing away from the open end of the body;

a pair of fingers extending from the sidewalls adjacent the open end of the body and inwardly towards the closed end of the body beyond the abutments, and terminating at free distal ends, the fingers being adapted to engage therebetween a flange of said stationary part and be compressed thereby;

a pair of stops at the free distal ends of the fingers, for engaging the abutments when the carrier is mounted on a flange of said stationary part and the carrier attempts to leave the flange, characterized in that the abutment engaging faces and engaging faces on the stops are substantially parallel to each other and normal to the longitudinal direction of the body, to provide a positive interlock between the abutments and the stops.

The following description of embodiments of the invention is given by way of example with reference to the accompanying drawing, wherein:

Fig. 1 is a section of a weatherstrip which embodies the invention;

Fig. 2 is a similar section showing the sealing action of the weatherstrip with an automobile door; and

Fig. 3 is a similar section showing the wraparound effect of the bulbous portion of the weatherstrip and the retention of the carrier of the weatherstrip.

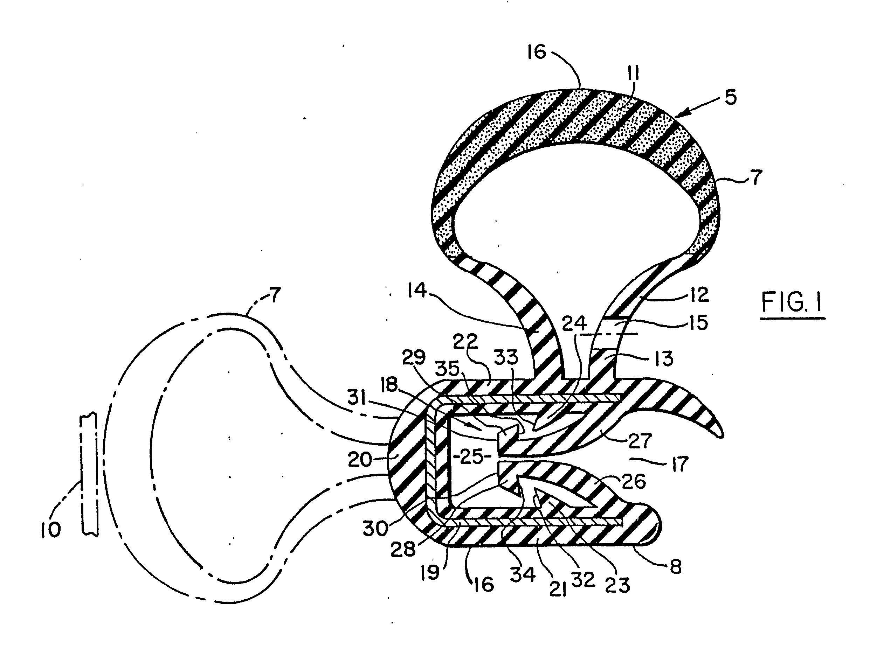

With reference to Figs. 1-3, there is shown an elongated weatherstrip or seal which, in this instance, is designed to be mounted around a car door opening to sealingly engage the car door 6 when it is rotated to a closed position. The seal 5 is composed of any suitable, resilient, elastomeric material, e.g. rubber. The seal 5 comprises a hollow, bulbous portion 7 which extends from a carrier portion 8 which is secured to a flange 9 of the car framce and holds the bulbous portion 7 in place for engaging the car door 6. The bulbous portion 7, shown in dotted line of Fig. 1, is positioned on the carrier portion 8 to engage an adjacent decklid 10, if such is desired.

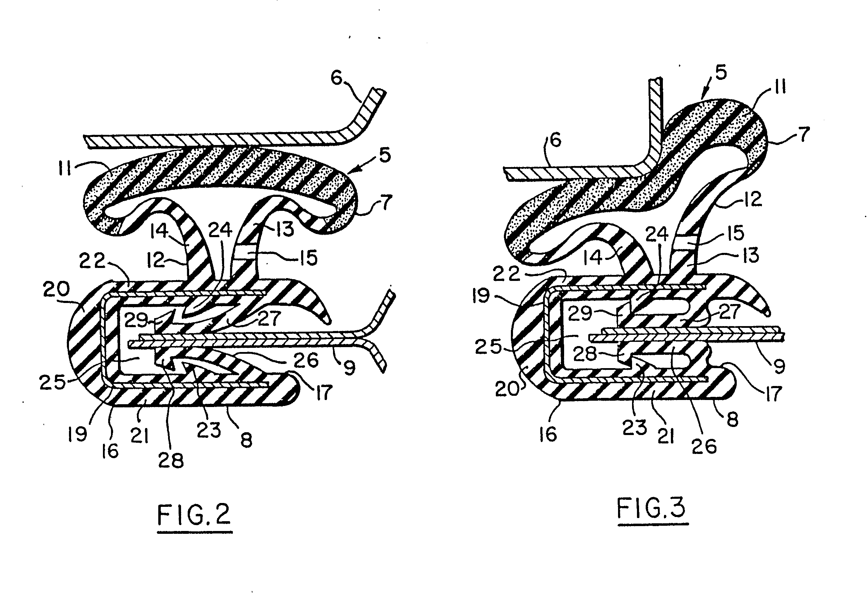

The bulbous portion 7, in cross-section, is mushroom-shaped having an outwardly curved cap 11 and a stem 12 that consists of two separate legs 13,14 which curve inwardly towards each other from the cap 11 to the carrier 8 and which increase in thickness as they approach the carrier 8. A plurality of similar apertures 15 are placed in the inner leg 13 closest the car frame, to allow the escape of air from within the hollow bulb 7 to facilitate collapse of the bulb 7 and closing of the car door 6. The cap 11 increases in thickness from the legs 13,14 to the peak 16 of the cap 11 midway between the legs 13,14. The cap 11 is thicker than the legs 13,14 of the stem 12, adjacent the cap 11, especially at the peak 16 of the bulb 7, i.e. the part of the bulb 7 farthest from the carrier 8. As seen in Figs. 2 and 3, the complete collapse of the cap 11 will not affect the aperture 15 which, in some prior art seals, will close upon collapse or distortion of the bulb.

The carrier 8, in cross-section essentially comprises a U-shaped body 16 with an open end 17, and a mechanism 18 for compressively engaging and holding the flange 9 of the car frame, when the carrier 8 is mounted on the flange 9. A U-shaped piece 19 of metal is embedded in the body 16 to reinforce the closed end 20 and opposing, parallel sidewalls 21,22 of the carrier 8. A pair of oppositely disposed abutments 23,24 project from the sidewalls 21,22 inwardly into the longitudinally extending space or opening 25 between the sidewalls 21,22 in spaced relation from the open end 17 of the carrier 8. A pair of resilient fingers 26,27 extend from the sidewalls 21,22 adjacent the open end 17 inwardly towards the closed end 20 beyond the abutments 23,24 to compressively engaged the flange 9 of the door frame as the carrier is mounted on the flange 9. A pair of stops 28,29 are provided at the free distal ends 30,31 of the fingers 26,27 for interlocking engagement with the abutments 23,24 should the carrier 8 attempt to pull away or escape from the flange 9, as seen in Fig. 2. The flange 9 pushes the fingers 26,27 apart as it enters the opening 25 to bring the stops 28,29 into alignment with the abutments 23,24. Note that the engaging faces 32,33 and 34,35 of the abutments 23,24 and stops 28,29, respectively, are substantially parallel and at right angles to the longitudinal axis of the opening 25 to provide a positive interlock between the abutments and stops and a tighter gripping action of the mechanism 18.

Thus, there has been described a weatherstrip with a mushroom shaped bulbous portion which is integrally formed with a carrier which is provided with a prir of fingers for firmly gripping the flange of a car frame on which the carrier is desired to be mounted.

## Claims

1. A resilient weatherstrip adapted to fit between two parts (9,6,10), one (6,10) of which is movable relative to the other, stationary, part (9), the weatherstrip comprising:

(a) a hollow bulbous sealing portion (7), and

(b) a carrier (8) for attachment to said stationary part (9), the hollow bulbous sealing portion (7) extending from the carrier (8) for engaging and being compressed by the movable part (6,10) when it moves towards said stationary part (9), the carrier (8) in cross section having:

a generally U-shaped body (16) with an open end (17) and a closed end (20), and a pair of opposing sidewalls (21,22) extending longitudinally from the closed end (20) to the open end (17);

a pair of abutments (23,24) projecting from the sidewalls (21,22) inwardly towards each other into the space between the sidewalls (21,22), the abutments (23,24) each having an engaging face (32,33) spaced from and facing away from the open end (17) of the body (16);

a pair of fingers (26,27) extending from the sidewalls (21,22) adjacent the open end (17) of the body (16) and inwardly towards the closed end (20) of the body (16) beyond the abutments (23,24), and terminating at free distal ends (30,31), the fingers (26,27) being adapted to engage therebetween a flange (9) of said stationary part and be compressed thereby;

a pair of stops (28,29) at the free distal ends (30,31) of the fingers (26,27), for engaging the abutments (23,24) when the carrier (8) is mounted on a flange (9) of said stationary part (9) and the carrier (8) attempts to leave the flange (9), characterized in that the abutment engaging faces (32,33) and engaging faces (34,35) on the stops (28,29) are substantially parallel to each other and normal to the longitudinal direction of the body (16), to provide a positive interlock between the abutments (23,24) and the stops (28,29).

2. A weatherstrip according to claim 1 which includes a U-shaped piece of metal embedded in the closed end (20) and sidewalls (21,22) of the carrier (8).

3. A weatherstrip according to claim 1 or claim 2 wherein the bulbous sealing portion (7) is normal to the carrier (8) which is adapted for attachment to a flange (9) of an automobile frame around a door opening.

4. A weatherstrip according to claim 1 or claim 2 wherein the bulbous portion (7) is axially aligned with the carrier (8) which is adapted for attachment to a flange (9) of an automobile frame around a decklid opening.

5. A weatherstrip according to any one of the preceding claims, fitted to a said stationary part which is an automobile frame around a door opening.

FIG.1

FIG.2

FIG.3